(19) Europäisches Patentamt / European Patent Office / Office européen des brevets

(11) **EP 1 269 482 B1**

(12) **FASCICULE DE BREVET EUROPEEN**

(45) Date de publication et mention
de la délivrance du brevet:
**05.03.2008 Bulletin 2008/10**

(51) Int Cl.:
**G21G 1/02** *(2006.01)*      **G21C 1/30** *(2006.01)*

(21) Numéro de dépôt: **01915445.9**

(86) Numéro de dépôt international:
**PCT/FR2001/000656**

(22) Date de dépôt: **06.03.2001**

(87) Numéro de publication internationale:
**WO 2001/067464 (13.09.2001 Gazette 2001/37)**

(54) **PROCEDE D'INCINERATION D'ELEMENTS CHIMIQUES TRANSURANIENS ET REACTEUR NUCLEAIRE METTANT EN OEUVRE CE PROCEDE**

VERFAHREN ZUR VERBRENNUNG VON CHEMISCHEN TRANSURANISCHEN ELEMENTEN UND MIT DIESEM VERFAHREN BETRIEBENER KERNREAKTOR

METHOD FOR INCINERATING TRANSURANIAN CHEMICAL ELEMENTS AND NUCLEAR REACTOR USING SAME

(84) Etats contractants désignés:
**BE CH DE GB IT LI**

(30) Priorité: **08.03.2000 FR 0002958**

(43) Date de publication de la demande:
**02.01.2003 Bulletin 2003/01**

(73) Titulaire: **COMMISSARIAT A L'ENERGIE ATOMIQUE**
**75015 Paris (FR)**

(72) Inventeur: **BERNARDIN, Bruno**
**Célony,**
**13090 Aix en Provence (FR)**

(74) Mandataire: **Poulin, Gérard et al**
**Société BREVATOME**
**3, rue du Docteur Lancereaux**
**75008 Paris (FR)**

(56) Documents cités:
**US-A- 5 774 514**

• **TAKAHASHI H: "Transmutation of high-level radioactive waste by a charged-particle accelerator" NUCLEAR TECHNOLOGY, 1995, USA, vol. 111, no. 1, pages 149-162, XP002162557 ISSN: 0029-5450**

• **RIEF H ET AL: "Some physics considerations in actinide and fission product transmutation" REACTOR PHYSICS AND REACTOR COMPUTATIONS. PROCEEDINGS OF THE INTERNATIONAL CONFERENCE ON REACTOR PHYSICS AND REACTOR COMPUTATIONS, PROCEEDINGS OF INTERNATIONAL CONFERENCE ON REACTOR PHYSICS AND REACTOR COMPUTATIONS, TEL AVIV, ISRAEL, 23-26 JAN. 1994, pages 108-114, XP000987320 1994, Beer-Sheva, Israel, Ben-Gurion Univ. of the Negev Press, Israel**

• **IGNATJEV S V: "Evaluation of the delayed neutron characteristics for transmutation of the high-level waste using fast reactor technology" PROCEEDINGS OF THE FIFTH INTERNATIONAL CONFERENCE ON RADIOACTIVE WASTE MANAGEMENT AND ENVIRONMENTAL REMEDIATION. ICEM '95, PROCEEDINGS OF ASME INTERNATIONAL CONFERENCE ON RADIOACTIVE WASTE MANAGEMENT AND ENVIRONMENTAL REMEDIATION, BERLIN, GERMANY, 3-, pages 501-504 vol.1, XP000987234 1995, New York, NY, USA, ASME, USA ISBN: 0-7918-1219-7**

EP 1 269 482 B1

## Description

### Domaine technique

L'invention concerne un procédé permettant d'incinérer des éléments chimiques transuraniens dans un réacteur nucléaire.

L'invention concerne également un réacteur nucléaire mettant en oeuvre ce procédé.

Parmi les éléments chimiques transuraniens susceptibles d'être incinérés selon l'invention, on citera notamment les déchets nucléaires à vie longue tels que les actinides mineurs, ainsi que le plutonium.

### Etat de la technique

Dans l'industrie nucléaire, les déchets à vie longue constituent un problème majeur pour l'environnement. C'est pourquoi on envisage de transmuter ces déchets en les incinérant.

Parmi les solutions initialement envisagées, on rappellera pour mémoire la spallation directe des actinides mineurs par un faisceau de particules et la fission de ces déchets par des neutrons issus directement d'une cible de spallation. Toutefois, ces méthodes sont actuellement écartées car l'incinération pondérale de déchets nécessiterait dans les deux cas des faisceaux d'intensité irréaliste.

Une autre solution consisterait à introduire les actinides mineurs à incinérer dans des réacteurs nucléaires classiques (à eau sous pression ou à neutrons rapides). Toutefois, la quantité de déchets introduite dans chaque réacteur devrait alors être limitée à environ 1 % du combustible. En effet, l'introduction de ces éléments se traduirait par la dégradation de certains paramètres importants pour la sûreté du réacteur, et notamment par une baisse de la fraction $\beta$ de neutrons retardés et du coefficient Doppler dans le coeur du réacteur. De plus, cette méthode conduirait à une complication difficilement acceptable de la gestion du coeur des réacteurs concernés et à un surcoût important car elle devrait s'appliquer à la quasi totalité du parc de réacteurs existant.

Pour bien comprendre l'importance de la fraction $\beta$ de neutrons retardés dans un réacteur nucléaire, il est rappelé que, dans un réacteur critique, il est nécessaire que la période propre du réacteur soit supérieure aux constantes de temps des phénomènes assurant la stabilité du système (contre réactions thermiques, dilatations, systèmes de régulation). Or, la période propre d'un réacteur critique varie dans le même sens que la fraction $\beta$. Par conséquent, dans un tel réacteur, la fraction de neutrons retardés doit être aussi supérieure à un seuil minimum.

Deux autres solutions sont actuellement envisagées pour l'incinération des déchets nucléaires. Il s'agit, d'une part, de réacteurs critiques dédiés à cette fonction et, 1 d'autre part, de systèmes hybrides sous critiques.

Dans les réacteurs critiques "dédiés", les caractéristiques du réacteur telles que la géométrie du coeur et la composition du combustible seraient modifiées, par rapport à un réacteur nucléaire classique, de façon à améliorer la tolérance de ces réacteurs à une plus forte concentration de déchets.

Dans la pratique, il est envisagé de définir le coeur d'un réacteur critique dédié après avoir déterminé, du strict point de vue de la sûreté, la valeur minimale de la fraction $\beta$ de neutrons retardés nécessaire pour un réacteur critique. On ajusterait ensuite la composition du combustible (ajout de $U_{235}$ et $Th_{232}$) et la capacité d'incinération, c'est-à-dire le pourcentage de déchets à introduire dans le coeur, pour que la fraction de neutrons retardés respecte avec une marge convenable la valeur minimale déterminée auparavant. La baisse du coefficient Doppler serait minorée, par ailleurs, en jouant sur la géométrie du coeur et la dureté du spectre.

Si la mise au point d'un tel réacteur critique dédié semble possible, elle sera certainement très difficile compte tenu des problèmes à résoudre.

De plus, dans l'hypothèse où cette étape serait franchie, le réacteur présenterait, par hypothèse, une fraction $\beta$ de neutrons retardés plus faible que celle des réacteurs à neutrons rapides classiques, pour lesquels cette fraction est déjà relativement faible. Même si la fraction de neutrons retardés répond aux impératifs de sûreté, un réacteur critique dédié disposerait de moins de marges que les réacteurs existants, vis-à-vis de certains types d'accidents. Il s'agit d'un inconvénient non négligeable pour une nouvelle filière de réacteurs.

L'autre solution actuellement envisagée pour l'incinération des déchets nucléaires concerne l'utilisation de systèmes hybrides sous critiques, ou "ADS" (de l'anglais "Accelerator Driven System"). Un système de ce type est décrit dans le document US-A-5 774 514.

Dans un tel système, un réacteur nucléaire sous critique est associé à une source externe de neutrons constituée par une cible de spallation placée à l'intérieur du coeur du réacteur. Plus précisément, une cible en un matériau généralement liquide, tel que du plomb-bismuth, est logée dans un réservoir en forme de doigt de gant placé dans un évidement formé dans le coeur du réacteur. La cible est bombardée par des protons émis par une source placée à l'extérieur de la cuve du réacteur. Les protons sont accélérés par un accélérateur également placé à l'extérieur de la cuve, pour atteindre l'énergie nécessaire à la spallation de la cible.

Dans un tel système, du fait que le réacteur est sous critique, il n'existe pas de contrainte sur la fraction $\beta$ de

neutrons retardés. En effet, le réacteur se comporte alors comme un simple amplificateur de la source externe de neutrons. Cela constitue, à priori, un atout de ce système, à condition de disposer d'une marge de sous criticité suffisante pour éviter à coup sûr le passage accidentel du réacteur dans un état critique. Pour cette raison, on envisage généralement, de donner aux coeurs des réacteurs des systèmes hybrides sous critiques un facteur $k_{eff}$ de multiplication effectif compris de préférence entre 0,9 et 0,95. La valeur maximale à ne pas dépasser est évaluée à 0,98.

L'efficacité des barres de contrôle qui sont utilisées dans les réacteurs critiques n'est pas suffisante pour permettre le pilotage des systèmes hybrides avec des niveaux de sous-criticité importants. Cette fonction est alors assurée entièrement par la source externe de neutrons.

Toutefois, un tel système hybride sous critique nécessite une source externe de neutrons de spallation importante. Cela se traduit par des exigences très élevées de puissance et de pilotabilité pour la source et l'accélérateur de protons, qui sont à l'origine d'un surcoût très important par rapport à un réacteur critique équivalent.

Par ailleurs, à l'inverse des réacteurs critiques, les systèmes hybrides sous critiques ne bénéficient que très peu des effets des contre réactions thermiques qui jouent un rôle modérateur important lors de certains types de transitoires. Ce problème est accentué par le fait que les temps de réponse à des variations de source ou de réactivité sont très courts, ce qui entraîne des variations transitoires de puissance rapides.

En outre, dans un tel système, il existe un risque d'accident spécifique constitué par l'injection en début de cycle de l'intensité maximale du faisceau de protons, requise en fin de cycle.

Il apparaît donc qu'aucune des deux solutions actuellement envisagées pour incinérer les déchets nucléaires ne présente d'avantages décisifs. Au contraire, ces solutions posent, l'une et l'autre, des problèmes qui pourraient s'avérer rédhibitoires dans l'avenir.

## Exposé de l'invention

L'invention a précisément pour objet un procédé d'incinération constituant une solution intermédiaire entre celle du réacteur critique dédié et celle du système hybride sous critique, cette solution permettant de résoudre les problèmes de sûreté liés à la diminution de la fraction β de neutrons retardés dans les réacteurs critiques dédiés ainsi que les problèmes posés notamment par la taille de la source et de l'accélérateur de protons, dans les réacteurs hybrides sous critiques.

Conformément à l'invention, ce résultat est obtenu par un procédé d'incinération d'éléments chimiques transuraniens, selon lequel on place lesdits éléments dans le coeur sous critique d'un réacteur nucléaire et on injecte dans le coeur des neutrons de spallation en provenance d'une source externe, caractérisé en ce que :

- on utilise un réacteur dont le coeur fonctionne à un faible niveau de sous-criticité, sensiblement égal à la différence entre une fraction souhaitée $\beta_T$ de neutrons retardés dans le coeur et une fraction réelle β de neutrons retardés dans le coeur ;
- on mesure le flux neutronique instantané n(t) dans le coeur ;
- on ajuste en temps réel la puissance de la source externe, à partir du flux neutronique mesuré n(t), de façon à simuler l'existence dans le coeur d'un groupe supplémentaire de neutrons retardés selon une fraction $\beta_s$ égale à ladite différence.

En d'autres termes, la faiblesse de la fraction β de neutrons retardés intrinsèque au coeur du réacteur, due à la présence dans celui-ci d'une proportion élevée d'éléments chimiques transuraniens, est compensée par l'adjonction fictive d'un groupe de neutrons retardés supplémentaire. Cela est réalisé en faisant fonctionner le coeur à un très faible niveau de sous criticité, qui permet de simuler approximativement la fraction de neutrons retardés à rajouter, c'est-à-dire le déficit de la fraction β qui doit être compensé. La mesure, en temps réel, du flux neutronique n(t) permet de calculer en temps réel l'évolution du nombre de précurseurs fictifs du groupe supplémentaire de neutrons retardés, de façon à ajuster, toujours en temps réel, la puissance de la source externe. Les neutrons injectés dans le coeur sont alors représentatifs de la décroissance des précurseurs fictifs du groupe supplémentaire élaboré par le calcul et viennent combler le déficit en neutrons engendré par le fonctionnement en régime sous critique.

Le système hybride ainsi constitué se comporte et se pilote comme un réacteur critique. En effet, la contre réaction établie entre la source externe et la puissance neutronique, par le biais d'un groupe supplémentaire fictif de précurseurs de neutrons retardés, assure la stabilité du système hybride très peu sous critique et le transforme, de manière fictive, en un réacteur critique disposant d'une fraction de neutrons retardés augmentée de $\beta_s$.

Le faible niveau de la fraction de neutrons retardés, découlant de la présence des éléments transuraniens dans le coeur, est ainsi compensé de façon telle que les impératifs de sûreté qui ne seraient pas respectés dans un réacteur critique dédié sont aisément satisfaits.

Un avantage essentiel du procédé d'incinération selon l'invention réside dans le fait que le très faible niveau de sous criticité du réacteur permet de réduire la puissance maximale de la source externe d'un facteur 20 à 30 par rapport à un système hybride conventionnel. Ainsi, à titre d'exemple, l'obtention d'une fraction $\beta_s$ de neutrons retardés supplémentaire d'environ 300 pcm ("pour cent mille"), dans un réacteur de 3000 MW, nécessiterait une intensité de faisceau d'environ 6,5 mA avec des protons de 1 GeV. Les différents éléments formant la source de neutrons externe, c'est-à-dire la source de protons, l'accélérateur de protons et la cible peuvent ainsi avoir des dimensions et des coûts compatibles avec une mise en oeuvre industrielle.

Du fait que le système se comporte et se pilote comme un réacteur critique, il permet de bénéficier des effets stabilisateurs des contre réactions thermiques et de l'effet Doppler, propres à ce type de réacteur.

Il présente, en outre, une sûreté améliorée par rapport à un réacteur critique équivalent, puisqu'il dispose, en plus de moyens d'arrêt d'urgence classique, d'une possibilité de supprimer rapidement et de façon fiable une partie importante des neutrons retardés, par coupure du faisceau émis par la source externe.

Avantageusement, le pilotage du système est assuré par des barres de contrôle absorbantes, insérées dans le coeur.

Dans la pratique, on utilise un réacteur dont le coeur est configuré pour présenter un facteur $k_{eff}$ de multiplication effectif sensiblement égal à 0,997.

Par ailleurs, on fixe de préférence la fraction souhaitée $\beta_T$ de neutrons retardés à environ 350 pcm.

L'ajustement de la puissance de la source externe s'effectue en agissant sur l'accélérateur de protons.

Dans un mode de réalisation préféré de l'invention, on détermine en temps réel le nombre $C_s(t)$ de précurseurs fictifs du groupe supplémentaire de neutrons retardés, à partir du flux neutronique $n(t)$ mesuré, en appliquant la relation :

$$\frac{dC_s(t)}{dt} = \frac{\beta_s}{\Lambda} \cdot n(t) - \lambda_s \cdot C_s(t) \quad \ldots \ldots \ldots \ldots \ldots \ldots (1)$$

dans laquelle :

$\Lambda$ représente la durée de vie des neutrons prompts ; et
$\lambda_s$ représente la constante de décroissance des précurseurs fictifs du groupe supplémentaire.

On régule ensuite, en temps réel, l'intensité $I(t)$ du faisceau de protons à la sortie de l'accélérateur de protons, en appliquant la relation :

$$I(t) = \frac{Q}{Z\varphi^*} \cdot \lambda_s \cdot C_s(t) \quad \ldots \ldots \ldots \ldots \ldots \ldots (2)$$

dans laquelle $C_s(t)$ est déterminé, en temps réel, à partir de la relation (1), et dans laquelle :

Q représente la charge du proton ($1,6.10^{-19}$C)
Z représente le nombre de neutrons produits par proton, dans la cible de spallation ; et
$\varphi^*$ est une constante représentative de l'importance de la source externe de neutrons par rapport au coeur du réacteur.

Placée de préférence au centre du coeur, la source aura un $\varphi^*$ sensiblement égale à 1. Si elle était placée en périphérie, son efficacité serait moindre, ce qui se traduirait par une valeur de $\varphi^*$ inférieure.

Par ailleurs, la valeur de la constante de décroissance $\lambda_s$ est cohérente avec les différentes valeurs de $\lambda_i$, qui dépendent de la nature des précurseurs de neutrons retardés et non de la composition du coeur. Cette valeur est, de préférence, d'environ $0,08$ s$^{-1}$.

L'invention a aussi pour objet un réacteur nucléaire pour l'incinération d'éléments chimiques transuraniens, comprenant un coeur sous critique, contenant lesdits éléments à incinérer, et une source externe de neutrons de spallation, caractérisé en ce que :

- le coeur présente en fonctionnement un niveau de sous criticité sensiblement égal à la différence entre une fraction souhaitée $\beta_T$ de neutrons retardés dans le coeur et une fraction réelle $\beta$ de neutrons retardés dans le coeur ;
- des moyens sont prévus pour mesurer, en temps réel, le flux neutronique instantané (t) dans le coeur ;
- des moyens de contre réaction sont prévus pour ajuster, en temps réel, la puissance de la source externe, à partir du flux neutronique mesuré n(t), de façon à simuler l'existence dans le coeur d'un groupe supplémentaire de neutrons retardés, selon une fraction $\beta_s$ égale à ladite différence.

## Brève description des dessins

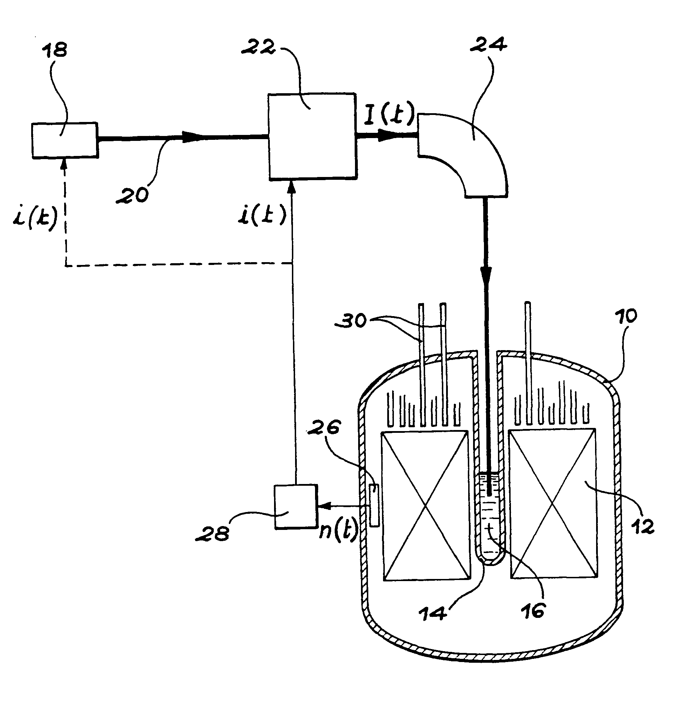

On décrira à présent, à titre d'exemple non limitatif, un mode de réalisation préféré de l'invention, en se référant aux dessins annexés, dans lesquels la figure unique est un schéma qui représente un réacteur nucléaire conforme à l'invention.

## Description détaillée d'un mode de réalisation préféré

Sur la figure unique, on a représenté très schématiquement un réacteur nucléaire conforme à l'invention. Ce réacteur est destiné à l'incinération d'éléments chimiques transuraniens tels que les déchets nucléaires à vie longue (actinides mineurs) et le plutonium.

Le réacteur selon l'invention se présente, de façon générale, comme un système hybride sous critique. Ce système peut prendre de nombreuses formes, telles que celles qui sont décrites, par exemple, dans le document US-A-5 774 514, auquel on pourra éventuellement se reporter, pour plus de détails.

On observera en préambule que le réacteur peut prendre indifféremment la forme d'un réacteur à neutrons rapides ou thermiques, sans sortir du cadre de l'invention. Les valeurs de paramètres indiqués à titre d'exemple dans ce document correspondent néanmoins à des réacteurs à neutrons rapides.

Comme le montre très schématiquement la figure unique, le réacteur comprend une cuve 10, dans laquelle est placé le coeur 12. Celui-ci est constitué, de façon habituelle, d'assemblages verticaux juxtaposés (non représentés). Le combustible nucléaire est intégré à ces assemblages selon des techniques bien connues de l'homme du métier et qui ne font pas partie de l'invention. Toutefois, étant donné que le réacteur est dédié à l'incinération d'éléments chimiques transuraniens, ces éléments sont introduits dans les assemblages à la place d'une partie du combustible nucléaire utilisé habituellement.

Selon une caractéristique de l'invention, le coeur 12 du réacteur présente en fonctionnement un très faible niveau de sous criticité. De façon plus précise, le niveau de sous criticité du coeur 12 du réacteur est sensiblement égal à la différence entre une fraction souhaitée $\beta_T$ de neutrons retardés dans le coeur et la fraction réelle $\beta$.

La fraction réelle $\beta$ dépend de la nature des éléments contenus dans le coeur. Du fait de la présence des éléments chimiques transuraniens, la fraction réelle $\beta$ des neutrons retardés est très faible, par exemple voisine de 100 pcm.

La fraction souhaitée $\beta_T$ est choisie arbitrairement, afin que le réacteur présente des conditions de sûreté comparables à celles des réacteurs critiques actuellement en service. Ainsi, on donnera par exemple à $\beta_T$ une valeur comparable à la fraction de neutrons retardés présente dans un réacteur à neutrons rapides, c'est-à-dire environ 350 pcm.

La comparaison des valeurs données ci-dessus, à titre d'exemple préférentiel, conduit à donner au niveau de sous criticité une valeur d'environ 250 à 300 pcm. Cette valeur, correspondant à la fraction $\beta_s$, est introduite dans la relation (1). Le facteur $k_{eff}$ de multiplication effectif du coeur du réacteur est alors sensiblement égal à 0,997.

Il faut noter que le niveau de sous-criticité du coeur et sa traduction en terme de facteur de multiplication effectif $k_{eff}$ sont conditionnés par la position des barres de commande qui elle même est déterminée par l'obtention de l'état critique pour l'ensemble du système.

Le coeur 12 du réacteur présente, au moins sur une partie de sa hauteur, une forme annulaire centrée sur un axe vertical.

Un tube 14, en forme de doigt de gant, pénètre dans la cuve 10 selon l'axe vertical du coeur 12, de telle sorte que son extrémité fermée est située dans le puits traversant le coeur. L'extrémité opposée du tube, telle que son extrémité haute dans le mode de réalisation illustré à titre d'exemple sur la figure, traverse la cuve de façon étanche.

Il est à noter que les autres composants du réacteur, tels que les pompes et les échangeurs de chaleur habituellement placés à l'intérieur de la cuve 10, ont été volontairement omis, pour ne pas surcharger la figure. Il va de soi que, dans la pratique, ces composants bien connus de l'homme du métier seront présents, de même que le fluide caloporteur, tel que de l'eau, du sodium ou un gaz neutre, selon la nature du réacteur.

L'extrémité fermée du tube 14, placée dans le puits traversant le coeur, contient une cible de spallation 16. Cette cible, généralement liquide, est réalisée en tout matériau susceptible d'émettre des neutrons de spallation, lorsqu'il est bombardé par un faisceau de protons présentant l'énergie requise. A titre d'exemple nullement limitatif, la cible 16 peut notamment être réalisée en plomb-bismuth. Des moyens (non représentés) sont habituellement prévus, de façon connue de l'homme du métier, pour assurer la fusion de la cible avant le démarrage du réacteur et son refroidissement en fonctionnement.

Une source de protons 18, placée à l'extérieur de la cuve 10 du réacteur, émet un faisceau de protons 20. Ce faisceau de protons est accéléré par un accélérateur de protons 22, puis guidé jusqu'à la cible 16, par exemple par des moyens de déviation 24 qui dirigent le faisceau accéléré selon l'axe vertical du tube 14. La source de protons 18, l'accélérateur de protons 20 et la cible 16 forment ensemble une source externe de neutrons de spallation, vis-à-vis du coeur du réacteur.

La source de protons 18, l'accélérateur 22 et les moyens de déviation 24 peuvent être réalisés de façon quelconque, en mettant en oeuvre les techniques connues de l'homme du métier. Conformément à l'invention, la source 18, l'accélérateur 22 et la cible 16 présentent, toutefois, des caractéristiques telles que la puissance maximale est réduite d'un facteur 20 à 30 par rapport aux systèmes hybrides classiques. Cela permet d'utiliser des composants de taille beaucoup plus réduite, notamment en ce qui concerne l'accélérateur 22.

Conformément à l'invention, le réacteur comprend, de plus, des moyens 26 pour mesurer, en temps réel, le flux neutronique instantané n(t) dans le coeur 12 du réacteur, ainsi que des moyens de contre réaction 28, pour ajuster en temps réel la puissance de la source externe de neutrons de spallation.

Les moyens 26 pour mesurer le flux neutronique instantané dans le coeur sont constitués par des capteurs de mesure neutroniques bien connus de l'homme du métier, éventuellement complétés par les circuits électroniques associés.

Les moyens de contre réaction 28 comprennent un calculateur qui reçoit le signal n(t) délivré par les moyens 26 de mesure du flux neutronique et délivre un signal i(t). Ce signal i(t) est un signal électrique qui est appliqué aux bornes de l'accélérateur 22 de façon à délivrer, à la sortie de celui-ci, un faisceau de protons présentant l'intensité I(t) calculée par le calculateur intégré dans les moyens de contre réaction 28.

Selon l'invention, le signal i(t) est calculé en temps réel, de façon à simuler l'existence, dans le coeur, d'un groupe supplémentaire de neutrons retardés, dont la fraction $\beta_s$, ajoutée à la fraction réelle ou intrinsèque $\beta$ des neutrons retardés dans le coeur, conduit à obtenir, dans le coeur, la fraction souhaitée $\beta_T$. La fraction $\beta_s$ ainsi calculée est sensiblement égale au niveau de sous criticité choisi par ailleurs pour le réacteur. On "transforme" ainsi le réacteur hybride sous critique en un réacteur critique.

Le calcul du signal i(t) se décompose en deux opérations : la détermination du nombre $C_s(t)$ de précurseurs fictifs du groupe supplémentaire de neutrons retardés, à partir du signal n(t) délivré par les moyens 26 de mesure du flux neutronique dans le coeur, puis le calcul du signal électrique i(t) à appliquer à la source 18 et/ou à l'accélérateur 22, afin d'obtenir les $C_s(t)$ précurseurs fictifs déterminés auparavant.

Le nombre $C_s(t)$ de précurseurs fictifs du groupe supplémentaire de neutrons retardés est déterminé à partir de la relation :

$$\frac{dC_s(t)}{dt} = \frac{\beta_s}{\Lambda} \cdot n(t) - \lambda_s \cdot C_s(t) \quad \ldots\ldots\ldots\ldots\ldots\ldots(1)$$

dans laquelle :

$\Lambda$ représente la durée de vie des neutrons prompts ; et

$\lambda_s$ représente la constante de décroissance des précurseurs fictifs du groupe supplémentaire de neutrons retardés.

La valeur de la fraction $\beta_s$ est choisie pour obtenir le $\beta_T$ souhaité compte tenu du $\beta$ intrinsèque du coeur. Le niveau de sous criticité dans le coeur, obtenu en fonctionnement, sera automatiquement égal à cette valeur.

La valeur de $\lambda_s$ est choisie de manière à être cohérente avec les différentes valeurs des constantes de décroissance des précurseurs de neutrons retardés dans le coeur. Elle est, par exemple, de l'ordre de 0,08 s$^{-1}$.

Les moyens de contre réaction 28 calculent ensuite la valeur du signal électrique i(t) à appliquer à la source 18 et/ou à l'accélérateur 22, pour que les neutrons retardés injectés dans le coeur du réacteur par la source externe soient représentatifs du nombre $C_s(t)$ de précurseurs fictifs calculé en temps réel (t désignant le temps). Ce calcul est réalisé, également en temps réel, à partir de la relation :

$$I(t) = \frac{Q}{Z\varphi^*} \cdot \lambda_s \cdot C_s(t) \quad \ldots\ldots\ldots\ldots\ldots\ldots(2)$$

dans laquelle :

Q représente la charge du proton (1,6.10$^{-19}$C)

Z représente le nombre de neutrons produits par proton, dans la cible de spallation 16 ; et

φ* est une constante, représentative de l'importance de la source externe de neutrons, par rapport au coeur du réacteur.

Pour une cible de spallation donnée, la valeur de Z est connue de l'homme du métier. A titre d'illustration, cette valeur est égale à 30 dans le cas d'une cible de plomb associée à des protons de 1 GeV.

Après avoir calculé l'intensité I(t) du faisceau de protons à obtenir à la sortie de l'accélérateur 22, les moyens de contre réaction 28 déterminent ensuite l'intensité i(t) du signal électrique de commande de l'accélérateur, en utilisant une troisième relation, propre à l'accélérateur 22 utilisé, reliant l'intensité i(t) du signal électrique de commande à l'intensité I(t) du faisceau de protons délivré.

Grâce à l'effet de contre réaction ainsi obtenu entre la puissance neutronique dans le coeur et la source externe, on réalise un réacteur qui se comporte comme s'il disposait d'une source de neutrons retardés supplémentaire à l'intérieur même du coeur. On transforme ainsi un système hybride en un réacteur critique disposant d'une fraction $\beta$ de neutrons retardés augmentée d'une valeur $\beta_s$. Cette valeur $\beta_s$ est choisie, de même que la valeur de la constante de décroissance $\lambda_s$ des précurseurs fictifs du groupe supplémentaire, de manière à porter la fraction totale $\beta_T$ des neutrons retardés dans le coeur à une valeur souhaitée. Comme on l'a déjà indiqué, cette valeur souhaitée est égale, de préférence, à environ 350 pcm de façon à satisfaire, de ce point de vue, aux exigences de sûreté dans des conditions comparables à celle des réacteurs nucléaires existants.

Le réacteur selon l'invention se comporte et se pilote donc comme un réacteur critique classique, par action sur la réactivité. A cet effet, il est équipé de barres de commande 30, comme on l'a illustré schématiquement sur la figure unique.

Le fonctionnement du réacteur selon l'invention satisfait aux équations cinétiques suivantes du modèle ponctuel:

$$\begin{cases} \dfrac{dn(t)}{dt} = \dfrac{\rho' - \beta_s - \beta}{\Lambda} \, .n(t) + \lambda C(t) + \lambda_s.C_s(t) + q_0 \\[2mm] \dfrac{dC(t)}{dt} = \dfrac{\beta}{\Lambda} \, .n(t) - \lambda C(t) \\[2mm] \dfrac{dC_s(t)}{dt} = \dfrac{\beta_s}{\Lambda} \, .n(t) - \lambda_s C_s(t) \end{cases}$$

dans lesquelles :

$\rho'$ représente la réactivité globale du réacteur ;

C(t) représente le nombre de précurseurs réels de neutrons retardés dans le coeur;

$\lambda$ représente la constante de décroissance de ces précurseurs réels ; et

$q_0$ représente le nombre de neutrons émis par la source inhérente au réacteur (cette valeur devient négligeable dès que la puissance neutronique dépasse quelques centaines de watt).

Les équations ci-dessus sont représentatives d'un système qui devient critique lorsque $\rho'$ tend vers zéro et possédant un groupe de neutrons retardés supplémentaire constitué par les neutrons de spallation émis par la cible 16.

Le réacteur nucléaire selon l'invention constitue ainsi une solution intermédiaire entre le réacteur critique dédié et le réacteur hybride sous critique, pour assurer l'incinération des éléments chimiques transuraniens. Cette solution intermédiaire résout les principaux problèmes posés par les deux types de réacteurs envisagés jusqu'à présent pour assurer cette fonction.

Ainsi, grâce à l'ajout d'un groupe de neutrons retardés supplémentaires, le réacteur selon l'invention évite les problèmes de sûreté posés par les réacteurs critiques classiques, lorsqu'il est envisagé de les utiliser pour incinérer des éléments chimiques transuraniens. En effet, la diminution de la fraction de neutrons retardés, due à la présence de ces éléments dans le coeur, est compensée par les neutrons retardés supplémentaires simulés et injectés par la source externe.

D'autre part, la "transformation" du système hybride en un réacteur critique assurée par les moyens de contre réaction 28 permet de faire fonctionner le coeur à un faible niveau de sous criticité. Cela permet de diminuer d'un facteur 20 à 30 la puissance de la source externe et, par conséquent, de donner à celle-ci, et notamment à l'accélérateur 22, une taille et un prix compatibles avec une mise en oeuvre industrielle.

Du fait que le comportement du réacteur selon l'invention est analogue à celui d'un réacteur critique classique, il peut être conçu pour répondre à toutes les exigences habituelles relatives à la sûreté. De ce point de vue, il est à noter que les moyens de mesure 26 et les moyens de contre réaction 28 sont, de préférence, redondants afin de supprimer tout risque de perte de contrôle de la source externe.

Du point de vue de la sûreté, le réacteur selon l'invention présente même des avantages supplémentaires par rapport aux réacteurs critiques classiques.

Ainsi, il est possible de couper le faisceau de protons lors d'un arrêt d'urgence. L'effet de cette action s'ajoute à celui des chutes des barres de contrôle 30. On accélère ainsi l'extinction de la population neutronique en éteignant instantanément une partie importante des précurseurs de neutrons retardés.

Par ailleurs, il est possible d'alimenter électriquement l'accélérateur 22 en utilisant l'énergie produite par le réacteur. Un arrêt automatique du système est alors assuré en cas de perte du débit primaire du réacteur.

Bien entendu, l'invention n'est pas limitée au mode de réalisation qui vient d'être décrit à titre d'exemple. Ainsi, outre le fait que le réacteur peut être d'un type quelconque (à eau sous pression, à neutrons rapides, etc.), les caractéristiques telles que la forme du coeur la nature du fluide primaire, l'emplacement et la nature de la cible de spallation, la nature de la source de protons et de l'accélérateur, la trajectoire suivie par le faisceau de protons, etc. peuvent être différentes de celles qui ont été décrites, sans sortir du cadre de l'invention.

## Revendications

1.  Procédé d'incinération d'éléments chimiques transuraniens, selon lequel on place lesdits éléments dans le coeur (12) sous critique d'un réacteur nucléaire et on injecte dans le coeur (12) des neutrons de spallation en provenance d'une source externe (16,18,22), **caractérisé en ce que** :

    - on utilise un réacteur dont le coeur (12) fonctionne à un niveau de sous-criticité sensiblement égal à la différence entre une fraction souhaitée $\beta_T$ de neutrons retardés dans le coeur (12) et une fraction réelle $\beta$ de neutrons retardés dans le coeur (12) ;
    - on mesure le flux neutronique instantané n(t) dans le coeur ;
    - on ajuste en temps réel la puissance de la source externe (16,18,22), à partir du flux neutronique mesuré n(t), de façon à simuler l'existence dans le coeur d'un groupe supplémentaire de neutrons retardés selon une fraction $\beta_s$ égale à ladite différence.

2.  Procédé selon la revendication 1, dans lequel on utilise un réacteur dont le facteur $k_{eff}$ de multiplication effectif est sensiblement égal à 0,997.

3.  Procédé selon l'une quelconque des revendications 1 et 2, dans lequel on fixe la fraction souhaitée $\beta_T$ de neutrons retardés à environ 350 pcm.

4.  Procédé selon l'une quelconque des revendications précédentes, dans lequel on utilise une source externe incluant une source de protons (18), un accélérateur de protons (22) et une cible de spallation (16), et on ajuste la puissance de ladite source externe en agissant sur l'accélérateur de protons (22).

5.  Procédé selon l'une quelconque des revendications précédentes, dans lequel on ajuste la puissance de la source externe en calculant le nombre $C_s(t)$ de précurseurs fictifs du groupe supplémentaire de neutrons retardés, selon une relation (1) :

$$\frac{dC_s(t)}{dt} = \frac{\beta_s}{\Lambda} \, . \, n(t) - \lambda_s \, . \, C_s(t)$$

    dans laquelle :

    $\Lambda$ représente la durée de vie des neutrons prompts ; et
    $\lambda_s$ représente la constante de décroissance des précurseurs fictifs du groupe supplémentaire.

6.  Procédé selon les revendications 4 et 5 combinés, dans lequel on régule, en temps réel, l'intensité I(t) du faisceau de protons à la sortie de l'accélérateur de protons (22) en appliquant une relation (2) :

$$I(t) = \frac{Q}{Z\varphi^*} \cdot \lambda_s \cdot C_s(t)$$

dans laquelle :

Q représente la charge du proton $(1,6.10^{-19}C)$

Z représente le nombre de neutrons produits par proton, dans la cible de spallation (16) ; et

$\varphi^{\cdot}$ est une constante, représentative de l'importance de la source externe (16,18,22), par rapport au coeur du réacteur.

7. Procédé selon la revendication 6, dans lequel $\varphi^*$ est sensiblement égal à 1.

8. Procédé selon l'une quelconque des revendications 5 à 7, dans lequel $\lambda_s$ est sensiblement égal à $0,08s^{-1}$.

9. Procédé selon l'une quelconque des revendications précédentes, dans lequel on pilote le réacteur au moyen de barres de contrôle (30) insérées dans le coeur (12).

10. Réacteur nucléaire pour l'incinération d'éléments chimiques transuraniens, comprenant un coeur (12) sous critique, contenant lesdits éléments à incinérer, et une source externe (16,18,22) de neutrons de spallation, **caractérisé en ce que** :

- le coeur (12) présente en fonctionnement un niveau de sous criticité sensiblement égal à la différence entre une fraction souhaitée $\beta_T$ de neutrons retardés dans le coeur (12) et une fraction réelle $\beta$ de neutrons retardés dans le coeur (12) ;
- des moyens (26) sont prévus pour mesurer, en temps réel, le flux neutronique instantané n(t) dans le coeur (12) ;
- des moyens de contre réaction (28) sont prévus pour ajuster, en temps réel, la puissance de la source externe (16,18,22), à partir du flux neutronique mesuré n(t) de façon à simuler l'existence dans le coeur (12) d'un groupe supplémentaire de neutrons retardés, selon, une fraction $\beta_s$ égale à ladite différence.

11. Réacteur nucléaire selon la revendication 10, dans lequel le facteur $k_{eff}$ de multiplication effectif est sensiblement égal à 0,997.

12. Réacteur nucléaire selon l'une quelconque des revendications 10 et 11, dans lequel la fraction souhaitée $\beta_T$ de neutrons retardés est sensiblement égale à 350 pcm.

13. Réacteur nucléaire selon l'une quelconque des revendications 10 à 12, dans lequel la source externe comprend une source de protons (18), un accélérateur de protons (22) et une cible de spallation (16), et dans lequel les moyens de contre réaction (28) agissent sur l'accélérateur de protons (22).

14. Réacteur nucléaire selon l'une quelconque des revendications 10 à 13, dans lequel les moyens de contre réaction (28) comprennent des moyens aptes à calculer le nombre $C_s(t)$ de précurseurs fictifs du groupe supplémentaire de neutrons retardés, selon une relation (1) :

$$\frac{dC_s(t)}{dt} = \frac{\beta_s}{\Lambda} \cdot n(t) - \lambda_s \cdot C_s(t)$$

dans laquelle :

$\Lambda$ représente la durée de vie des neutrons prompts ; et

$\lambda_s$ représente la constante de décroissance des précurseurs fictifs du groupe supplémentaire.

15. Réacteur nucléaire selon les revendications 13 et 14 combinées, dans lequel les moyens de contre réaction (28) régulent l'intensité I(t) du faisceau de protons sortant de l'accélérateur de protons (22) en appliquant une relation (2) :

$$I(t) = \frac{Q}{Z\varphi^*} \cdot \lambda_s \cdot C_s(t)$$

dans laquelle :

Q représente la charge du proton $(1,6.10^{-19}C)$
Z représente le nombre de neutrons produits par proton, dans la cible de spallation (16) ; et
$\varphi^*$ est une constante, représentative de l'importance de la source externe, par rapport au coeur du réacteur.

**16.** Réacteur nucléaire selon la revendication 15, dans lequel $\varphi^*$ est sensiblement égal à 1.

**17.** Réacteur nucléaire selon l'une quelconque des revendications 14 à 16, dans lequel $\lambda_s$ est sensiblement égal à $0,08s^{-1}$.

**18.** Réacteur nucléaire selon l'une quelconque des revendications 10 à 17, dans lequel des barres de contrôle (30) sont insérées dans le coeur (12).

**Claims**

**1.** Incineration process for transuranic chemical elements, in which said elements are placed in the sub-critical core (12) of a nuclear reactor and spallation neutrons, emanating from an external source (16, 18, 22), are injected into the core (12), **characterised in that**:

- a reactor is used in which the core (12) operates at a level of sub-criticality substantially equal to the difference between a desired fraction $\beta_t$ of delayed neutrons in the core (12) and a real fraction $\beta$ of delayed neutrons in the core (12).
- the instantaneous neutron flux n (t) in the core is measured.
- the power of the external source (16, 18, 22) is adjusted in real time, based on the measured neutron flux n (t), in such a way as to simulate the existence in the core of a supplementary group of delayed neutrons according to a fraction $\beta_s$ equal to said difference.

**2.** Process according to claim 1, in which a reactor whose effective multiplication factor $k_{eff}$ is substantially equal to 0.997 is used.

**3.** Process according to either of claims 1 or 2, in which the desired fraction $\beta_T$ of delayed neutrons is set at around 350 pcm.

**4.** Process according to any of the previous claims, in which an external source including a source of protons (18), a proton accelerator (22) and a spallation target (16) is used, and the power of said external source is adjusted by acting on the proton accelerator (22).

**5.** Process according to any of the previous claims, in which the power of the external source is adjusted by calculating the number $C_s$ (t) of fictitious precursors from the supplementary group of delayed neutrons according to the equation (1):

$$\frac{dC_s(t)}{dt} = \frac{\beta_s}{\Lambda} \cdot n(t) - \lambda_s \cdot C_s(t)$$

in which:

$\Lambda$ represents the lifetime of the prompt neutrons, and
$\lambda_s$ represents the decay constant for the fictitious precursors from the supplementary group.

**6.** Process according to claims 4 and 5 combined, in which the intensity I (t) of the proton beam at the exit of the proton accelerator (22) is adjusted in real time, by applying the equation (2):

$$I(t) = \frac{Q}{Z\varphi^*} . \lambda_s . C_s(t)$$

in which :

Q represents the proton charge (1.6 . $10^{-19}$ C)
Z represents the number of neutrons produced per proton in the spallation target (16), and
$\varphi^*$ is a constant, representative of the importance of the external source (16, 18, 22) compared to the reactor core.

7. Process according to claim 6, in which $\varphi^*$ is substantially equal to 1.

8. Process according to any of claims 5 to 7, in which $\lambda_s$ is substantially equal to 0.8 $s^{-1}$.

9. Process according to any of the previous claims, in which the reactor is controlled by means of control rods (30) inserted into the core (12).

10. Nuclear reactor for the incineration of transuranic chemical elements, comprising a sub-critical core (12), containing said elements to be incinerated, and an external source (16, 18, 22) of spallation neutrons, **characterised in that** :

- the core (12) functions at a sub-criticality level substantially equal to the difference between a desired fraction $\beta_t$ of delayed neutrons in the core (12) and a real fraction $\beta$ of delayed neutrons in the core (12) ;
- means (26) are provided for measuring, in real time, the instantaneous neutron flux n (t) in the core ;
- means of counter reaction (28) are provided to adjust, in real time, the power of the external source (16, 18, 22) based on the measured neutron flux n (t) in such a way as to simulate the existence in the core (12) of a supplementary group of delayed neutrons, according to a fraction $\beta_s$ equal to said difference.

11. Nuclear reactor according to claim 10, in which the effective multiplication factor $k_{eff}$ is substantially equal to 0.997.

12. Nuclear reactor according to either of claims 10 or 11, in which the desired fraction $\beta_T$ of delayed neutrons is substantially equal to 350 pcm.

13. Nuclear reactor according to any of claims 10 to 12, in which the external source comprises a proton source (18), a proton accelerator (22) and a spallation target (16), and in which the means of counter reaction (28) act on the proton accelerator (22).

14. Nuclear reactor according to any of claims 10 to 13, in which the means of counter reaction (28) comprise means suited to calculating the number $C_s$ (t) of fictitious precursors from the supplementary group of delayed neutrons, according to the equation (1) :

$$\frac{dC_s(t)}{dt} = \frac{\beta_s}{\Lambda} . n(t) - \lambda_s . C_s(t)$$

in which :

$\Lambda$ represents the lifetime of the prompt neutrons, and
$\lambda_s$ represents the decay constant for the fictitious precursors from the supplementary group.

15. Nuclear reactor according to claims 13 and 14 combined, in which the means of counter reaction (28) regulate the intensity I (t) of the proton beam emanating from the proton accelerator (22), according to the equation (2):

$$I(t) = \frac{Q}{Z\varphi^*} . \lambda_s . C_s(t)$$

in which :

Q represents the proton charge (1.6 . $10^{-19}$ C)

Z represents the number of neutrons produced per proton in the spallation target (16), and

$\varphi^*$ is a constant, representative of the importance of the external source compared to the reactor core.

16. Nuclear reactor according to claim 15, in which $\varphi^*$ is substantially equal to 1.

17. Nuclear reactor according to any of claims 14 to 16, in which $\lambda_s$ is substantially equal to 0.08 s$^{-1}$.

18. Nuclear reactor according to any of claims 10 to 17, in which the control rods (30) are inserted into the core (12).

**Patentansprüche**

1. Verfahren zur Einäscherung chemischer Transuranelemente, wobei die Elemente in den unterkritischen Kern (12) eines Kernreaktors verbracht werden und Spallationsneutronen aus einer externen Quelle (16, 18, 22) in den Kern (12) injiziert werden, **dadurch gekennzeichnet, daß**:

- ein Reaktor verwendet wird, dessen Kern (12) auf einem unterkritischen Niveau im wesentlichen gleich dem Unterschied zwischen einem gewünschten Bruchteil $\beta_T$ im Kern (12) verzögerter Neutronen und einem realen Bruchteil $\beta$ im Kern (12) verzögerter Neutronen arbeitet;
- der momentane Neutronenfluss n(t) in dem Kern gemessen wird, und
- die Leistung der externen Quelle (16, 18, 22) auf der Grundlage des gemessenen Neutronenflusses n(t) in der Weise in Echtzeit eingestellt wird, um das Vorhandensein einer zusätzlichen Gruppe verzögerter Neutronen in dem Kern entsprechend einem Bruchteil $\beta_s$ gleich diesem Unterschied zu simulieren.

2. Verfahren gemäß Anspruch 1, wobei ein Reaktor verwendet wird, dessen effektiver Multiplikationsfaktor $k_{eff}$ im wesentlichen gleich 0,997 ist.

3. Verfahren gemäß einem der Ansprüche 1 und 2, wobei der gewünschte Bruchteil $\beta_T$ der verzögerten Neutronen auf etwa 350 pcm festgelegt ist.

4. Verfahren gemäß einem der vorangehenden Ansprüche, wobei eine externe Quelle verwendet wird, die eine Protonenquelle (18), einen Protonenbeschleuniger (22) und ein Spallationstarget (16) einschließt und die Leistung dieser externen Quelle durch Einwirken auf den Protonenbeschleuniger (22) eingestellt wird.

5. Verfahren gemäß einem der vorangehenden Ansprüche, wobei die Leistung der externen Quelle durch Berechnen der Anzahl $C_s(t)$ der fiktiven Vorläufer verzögerter Neutronen aus der zusätzlichen Gruppe gemäß der Gleichung (1) eingestellt wird:

$$\frac{dC_s(t)}{dt} = \frac{\beta_s}{\Lambda} . n(t) - \lambda_s . C_s(t)$$

worin

$\Lambda$ die Lebensdauer der prompten Neutronen darstellt und

$\lambda_s$ die Zerfallskonstante der fiktiven Vorläufer aus der zusätzlichen Gruppe darstellt.

6. Verfahren gemäß den kombinierten Ansprüchen 4 und 5, wobei die Intensität I(t) des Protonenstrahls am Austritt des Protonenbeschleunigers (22) durch Anwenden der Gleichung (2) in Echtzeit geregelt wird:

$$I(t) = \frac{Q}{Z\varphi^*} \cdot \lambda_s \cdot C_s(t)$$

worin

Q die Protonenladung ($1{,}6 \cdot 10^{-19}$ C) darstellt,

Z die Anzahl der in dem Spallationstarget (16) je Proton erzeugten Neutronen darstellt, und

$\varphi^*$ eine Konstante ist, die ein Maß für die externe Quelle (16, 18, 22) in Bezug auf den Reaktorkern darstellt.

**7.** Verfahren gemäß Anspruch 6, wobei $\phi^*$ im wesentlichen gleich 1 ist.

**8.** Verfahren gemäß einem der Ansprüche 5 bis 7, wobei $\lambda_s$ im wesentlichen gleich 0,08 $S^{-1}$ ist.

**9.** Verfahren gemäß einem der vorangehenden Ansprüche, wobei der Reaktor mittels in den Kern (12) eingeführter Steuerstäbe (30) gesteuert wird.

**10.** Kernreaktor zur Einäscherung chemischer Transuranelemente, umfassend einen unterkritischen Kern (12), der die einzuäschernden Elemente enthält, und eine externe Quelle (16, 18, 22) von Spallationsneutronen, **dadurch gekennzeichnet, daß**:

- der Kern (12) auf einem unterkritischen Niveau im wesentlichen gleich dem Unterschied zwischen einem gewünschten Bruchteil $\beta_T$ im Kern (12) verzögerter Neutronen und einem realen Bruchteil $\beta$ im Kern (12) verzögerter Neutronen arbeitet;
- Mittel (26) zur Echtzeitmessung des momentanen Neutronenflusses n(t) in dem Kern vorgesehen sind, und
- Mittel (28) zur Gegenreaktion vorgesehen sind, um die Leistung der externen Quelle (16, 18, 22) auf der Grundlage des gemessenen Neutronenflusses n(t) in der Weise in Echtzeit einzustellen, um das Vorhandensein einer zusätzlichen Gruppe verzögerter Neutronen in dem Kern (12) entsprechend einem Bruchteil $\beta_s$ gleich diesem Unterschied zu simulieren.

**11.** Kernreaktor gemäß Anspruch 10, bei dem der effektive Multiplikationsfaktor $k_{eff}$ im wesentlichen gleich 0,997 ist.

**12.** Kernreaktor gemäß einem der Ansprüche 10 oder 11, bei dem der gewünschte Bruchteil $\beta_T$ der verzögerten Neutronen im wesentlichen etwa 350 pcm beträgt.

**13.** Kernreaktor gemäß einem der Ansprüche 10 bis 12, bei dem die externe Quelle eine Protonenquelle (18), einen Protonenbeschleuniger (22) und ein Spallationstarget (16) umfaßt und bei dem die Mittel (28) zur Gegenreaktion auf den Protonenbeschleuniger (22) einwirken.

**14.** Kernreaktor gemäß einem der Ansprüche 10 bis 13, bei dem die Mittel (28) zur Gegenreaktion Mittel umfassen, die zum Berechnen der Anzahl $C_s(t)$ der fiktiven Vorläufer verzögerter Neutronen aus der zusätzlichen Gruppe gemäß der Gleichung (1) geeignet sind:

$$\frac{dC_s(t)}{dt} = \frac{\beta_s}{\Lambda} \cdot n(t) - \lambda_s \cdot C_s(t)$$

worin

$\Lambda$ die Lebensdauer der prompten Neutronen darstellt und

$\lambda_s$ die Zerfallskonstante der fiktiven Vorläufer aus der zusätzlichen Gruppe darstellt.

**15.** Kernreaktor gemäß den kombinierten Ansprüchen 13 und 14, bei dem Mittel (28) zur Gegenreaktion die Intensität I(t) des aus dem Protonenbeschleuniger (22) austretenden Protonenstrahls gemäß der Gleichung (2) steuern:

$$I(t) = \frac{Q}{Z\varphi^*} \cdot \lambda_s \cdot C_s(t)$$

worin

Q die Protonenladung ($1{,}6 \cdot 10^{-19}$ C) darstellt,

Z die Anzahl der in dem Spallationstarget (16) je Proton erzeugten Neutronen darstellt, und $\varphi^*$ eine Konstante ist, die ein Maß für die externe Quelle (16, 18, 22) in Bezug auf den Reaktorkern darstellt.

16. Kernreaktor gemäß Anspruch 15, bei dem $\varphi^*$ im wesentlichen gleich 1 ist.

17. Kernreaktor gemäß einem der Ansprüche 14 bis 16, bei dem $\lambda_s$ im wesentlichen gleich 0,08 $s^{-1}$ ist.

18. Kernreaktor gemäß einem der Ansprüche 10 bis 17, bei dem die Steuerstäbe (30) in den Kern (12) eingeführt sind.

**EP 1 269 482 B1**

## RÉFÉRENCES CITÉES DANS LA DESCRIPTION

**Documents brevets cités dans la description**

- US 5774514 A